# EUROPÄISCHE PATENTSCHRIFT

(11) **EP 1 985 889 B1**
(45) Veröffentlichungstag und Bekanntmachung des Hinweises auf die Patenterteilung: **05.05.2010**
(21) Anmeldenummer: 08005266.5
(22) Anmeldetag: 20.03.2008
(51) Int. Cl.: F16F 9/512

(54) **Schwingungsdämpfer mit amplitudenselektiver Dämpfkraft**
Vibration damper with amplitude dependent damping force
Amortisseur de vibrations avec une force d'amortissement dépendant de l'amplitude

(30) Priorität: 27.04.2007 DE 102007019897
(43) Veröffentlichungstag der Anmeldung: 29.10.2008
(73) Patentinhaber: ZF Friedrichshafen AG, 88038 Friedrichshafen (DE)
(72) Erfinder: Hammer, Thomas, 97653 Bischofsheim (DE); Doppernas, Michael-Johann, 96170 Priesendorf (DE); Planitzer, Matthias, 97520 Röthlein (DE); Denner, Manfred, 97711 Massbach (DE)

(56) Entgegenhaltungen:
- DE-A1-102005 020 293
- US-A1- 2005 056 501

## Beschreibung

Die Erfindung betrifft einen Schwingungsdämpfer mit amplitudenselektiver Dämpfkraft gemäß dem Oberbegriff von Patentanspruch 1.

Aus der DE 10 2005 020 293 A1, Fig. 3, ist ein gattungsbildender Schwingungsdämpfer bekannt, dessen Kolbenanordnung einen konventionellen Kolben mit Ventilscheiben und eine zusätzliche Baueinheit für die Funktion der amplitudenselektiven Dämpfkrafterzeugung aufweist. Die Baueinheit verfügt über einen hülsenförmigen Grundträger mit einer Anschlagfläche für einen axial beweglichen Schaltring. Auf der Mantelfläche des Grundträgers ist eine Distanzhülse mit innenseitigen Nuten angeordnet, wobei die Nuten und die Mantelfläche Bypasskanäle zu einer Strömungsverbindung zwischen der äußeren Mantelfläche der Distanzhülse und der Innenwandung eines Zylinders bilden. Ein Klemmring sorgt für eine radiale und axiale Fixierung der Baueinheit am Kolben. In dem Klemmring sind Anschlusskanäle an die beschriebenen Bypasskanäle ausgeführt. Die Herstellung der Einzelteile gestaltet sich ziemlich schwierig, so dass beträchtliche Fertigungskosten anfallen.

Dieses Konstruktionsprinzip erfordert eine Kolbenmutter für die Fixierung des Kolbens und der Ventilscheiben auf einem Kolbenstangenzapfen. Eine zweite Schraubmutter sichert die Baueinheit am Kolben. Schon bei einem konventionellen Kolbenventil wird viel Sorgfalt auf die Sicherung der Kolbenmutter verwendet, da eine gelöste Kolbenmutter u. U. den völligen Ausfall der Dämpffunktion mit sich bringen könnte.

Die Aufgabe der vorliegenden Erfindung besteht darin, eine amplitudenselektive Baueinheit derart weiterzuentwickeln, bei denen die aus dem Stand der Technik bekannten Probleme behoben sind.

Erfindungsgemäß wird die Aufgabe dadurch gelöst, dass der Verteilerabschnitt und der Hülsenabschnitt einteilig ausgeführt sind und mit dem Kolben über einen gemeinsamen Spannring eine Verspannungskette bilden.

Der sehr einfache Aufbau der einzelnen Bauteile der Verspannungskette vereinfacht die sintertechnische Herstellung. Des Weiteren wird im Vergleich zum genannten Stand der Technik ein Befestigungsmittel eingespart, für das kein Sicherungswand zu betreiben ist.

In weiterer vorteilhafter Ausgestaltung der Erfindung trägt ein Kopfring an dem dem Verteilerabschnitt gegenüberliegenden Ende des Hülsenabschnitts eine der Anschlagflächen für den Schaltring. Dadurch kann das Bauteil Verteilerabschnitt-Hülsenabschnitt ohne Hinterschneidungen ausgeführt werden.

Gemäß einem vorteilhaften Unteranspruch weist der Kopfring einen Zentrieransatz auf, der mit einer Innenmantelfläche des Hülsenabschnitts zusammenwirkt.

Eine Anschlagfläche wird von einer Scheibenanordnung gebildet. Die Scheibenanordnung kann durch eine vielfältige Kombination mehrere Scheiben zusätzliche Funktionen übernehmen.

Der Kopfring weist in Richtung des Hülsenabschnitts ein Stufenprofil zur Abstützung der Scheibenabordnung auf, die mit einer Stufe des Stufenprofils eine Ringnut für einen axial beweglichen Ventilring bildet. Auch diese Maßnahme dient der Optimierung der sintertechnischen Herstellung der Bauteile

Deshalb weist auch der Verteilerabschnitt mindestens einen in Richtung des Kolbens ausgerichteten Absatz auf, der zusammen mit einer axialen Stirnfläche des Kolbens eine Ringnut für einen Ventilring bildet.

Anhand der folgenden Figurenbeschreibung soll die Erfindung näher erläutert werden. Es zeigt:
- Fig. 1: Schnitt durch einen Schwingungsdämpfer im Bereich eines Kolbens

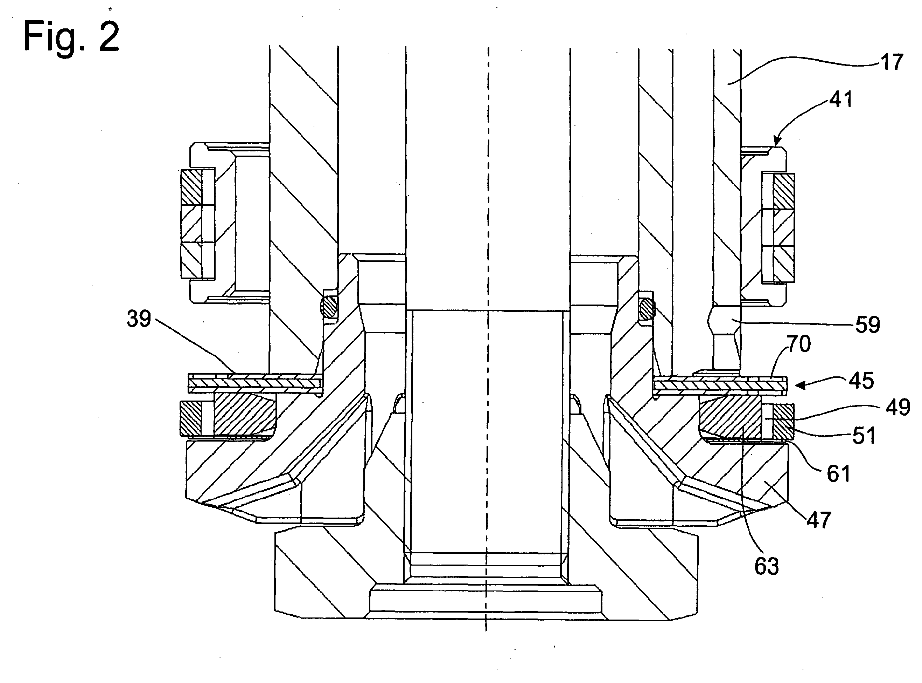

- Fig. 2 u. 3: Detaildarstellung im Bereich einer Anschlagfläche für einen axial beweglichen Schaltring

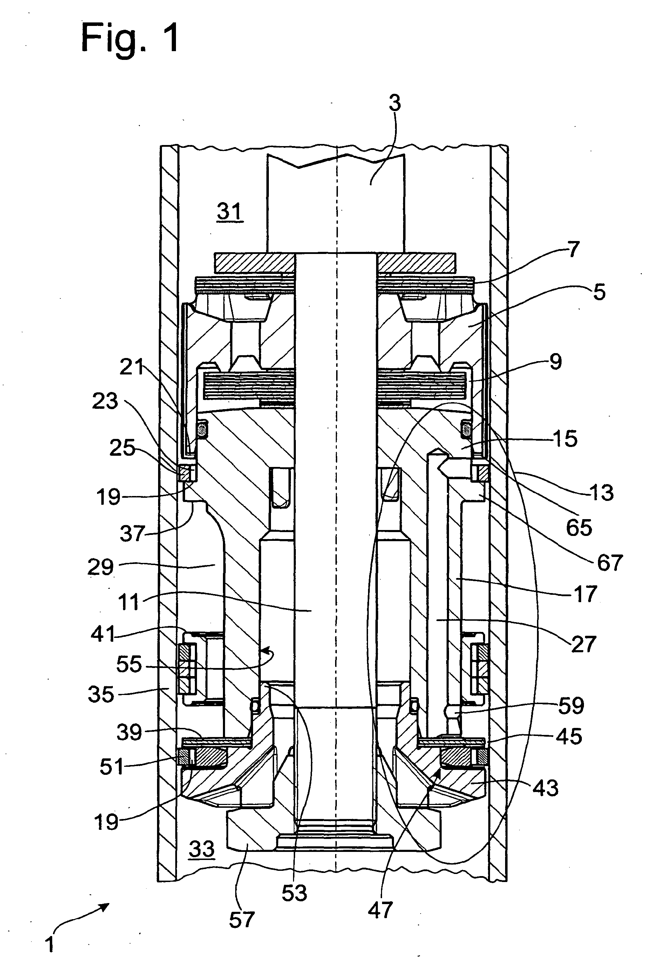

Die Figur 1 zeigt eine Schnittdarstellung durch einen Schwingungsdämpfer 1. Der Schwingungsdämpfer umfasst eine axiale bewegliche Kolbenstange 3, an der ein Kolben 5 mit Ventilscheiben 7; 9 angeordnet sind. Dem Kolben schließt sich auf einem Kolbenstangenzapfen 11 eine Baueinheit 13 zur Erzeugung einer amplitudenselektiven Dämpfkraft an. Die Baueinheit 13 umfasst einen Verteilerabschnitt 15 und einen Hülsenabschnitt 17, die ein einteiliges Bauteil bilden. Der Verteilerabschnitt 15 weist in Richtung des Kolbens 5 einen Absatz 19 auf, der mit einer Stirnfläche 21 des Kolbens 5 eine Ringnut 23 für einen Ventilring 25 bildet. Dieser Ventilring 25 steuert den Zu- und Abfluss von Bypässen 27 innerhalb des Hülsenabschnitts 17, der auf seiner äußeren Mantelfläche mindestens eine axial verlaufende Nut als Strömungsverbindung 29 zwischen einem kolbenstangenseitigen und einem kolbenstangenfernen Arbeitsraum 31; 33 in einem Zylinder 35 aufweist.

Die Strömungsverbindung 29 wiederum wird von einem zwischen zwei Anschlagflächen 37; 39 axial beweglichen Schaltring 41 gesteuert. Eine erste Anschlagfläche 37 wird von dem Verteilerabschnitt 15 gebildet. Am gegenüberliegenden Ende des Hülsenabschnitts 17 trägt ein Kopfring 43 eine zweite Anschlagfläche 39. Die zweite Anschlagfläche 39 wird von einer Scheibenanordnung 45 gebildet. Am Kopfring 43 ist in Richtung des Hülsenabschnitts 17 ein Stufenprofil 47 zur Abstützung der Scheibenanordnung 45 ausgeführt, die zusammen mit einer Stufe des Stufenprofils eine Ringnut 49 für einen zweiten axial beweglichen Ventilring 51 bildet.

Der Kopfring 43 verfügt über einen Zentrieransatz 53, der mit einer Innenmantelfläche 55 des Hülsenabschnitts 17 zusammenwirkt, so dass der Kolben 5 mit dem einteiligen Verteilerabschnitt-Hülsenabschnitt 15; 17, dem Kopfring 43 und einem Spannring 57 eine Verspannungskette bilden.

Bei einer Ausfahrbewegung der Kolbenstange 3 in Richtung des kolbenstangenseitigen Arbeitsraums 31 verschließt der erste Ventilring 25 den direkten Zustrom von Dämpfmedium in die Strömungsverbindung 29. Austrittsöffnungen 59 der Bypässe 27 sind solange geöffnet, bis der Schaltring 41 auf der zweiten Anschlagfläche 39 zur Anlage kommt. Während der weiteren Ausfahrbewegung bestimmt eine im Vergleich zur Aussparung in der Voröffnungsscheibe 61 kleinere Aussparung 70 in der Anschlagfläche 39 den dann wirksamen Bypassquerschnitt. Innerhalb einer Betriebsbewegung des Schaltrings 41 zwischen den beiden Anschlagflächen 37; 39 wird der wirksame Drosselquerschnitt von einer Aussparung innerhalb einer Voröffnungsscheibe 61 zwischen dem zweiten Ventilring 51 und dem Kopfring 47 gebildet. Ein Zentrierring 63 verspannt die Voröffnungsscheibe 61 zwischen dem Kopfring 47 und der Scheibenanordnung 45.

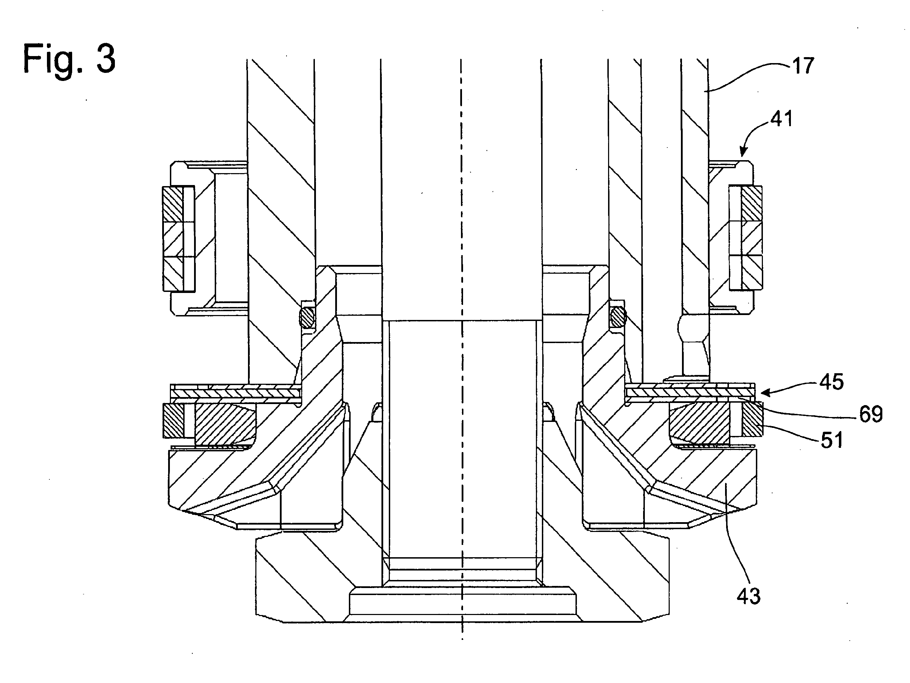

Während einer Kolbenstangeneinfahrbewegung legt sich der erste Ventilring 25 an die Stirnfläche 21 des Kolbens 5 an. Mindestens eine Rille 65 verhindert den vollständigen Verschluss der Bypassöffnungen. Zusätzlich kann das Dämpfmedium zwischen dem ersten Ventilring 25 und einem Absatz 67 des Verteilerabschnitts 15 aus der Strömungsverbindung 29 abfließen, bis der Schaltring 41 an der ersten Anschlagfläche 37 zur Anlage kommt. Synchron zur Kolbenstangeneinfahrbewegung legt sich der zweite Ventilring 51 an die Scheibenanordnung 45 (Fig. 3) an, so dass ein im Vergleich zum Voröffnungsquerschnitt 61 zumindest gleichgroßer Voröffnungsquerschnitt 69 zur Verfügung steht. Die Position des von der Scheibenanordnung 45 abgehobenen Schaltrings 41 hat bei einer Kolbenstangeneinfahrbewegung keinen Einfluss auf die Dämpfkrafteinstellung, die von dem Voröffnungsquerschnitt 69 in der Scheibenanordnung 45 bestimmt wird.

Wenn der Schaltring 41 eine der Anschlagflächen 37; 39 erreicht hat, öffnen richtungsabhängig die Ventilscheiben 5; 7 und bestimmen den weiteren Dämpfkraftverlauf.

## Patentansprüche

1. Schwingungsdämpfer mit einer Baueinheit zur Erzeugung einer amplitudenselektiven Dämpfkraft, umfassend einen an einem Kolben fixierten Verteilerabschnitt, der über einen Anschluss eine Dämpfmittelströmung zwischen einer Strömungsverbindung und mindestens einem Bypass innerhalb eines Hülsenabschnitts der Baueinheit steuert, wobei die Baueinheit einen zwischen zwei Anschlagflächen axial beweglichen Schaltring aufweist, der die Strömungsverbindung steuert, und ein Befestigungsmittel die Baueinheit auf einer Kolbenstange des Schwingungsdämpfers fixiert,
**dadurch gekennzeichnet,**
**dass** der Verteilerabschnitt (15) und der Hülsenabschnitt (17) einteilig ausgeführt sind und mit dem Kolben (5) über einen gemeinsamen Spannring (57) eine Verspannungskette bilden.

2. Schwingungsdämpfer nach Anspruch 1,
**dadurch gekennzeichnet,**
**dass** ein Kopfring (43) an dem dem Verteilerabschnitt (15) gegenüberliegenden Ende des Hülsenabschnitts (17) eine der Anschlagflächen (37; 39) für den Schaltring (41) trägt.

3. Schwingungsdämpfer nach Anspruch 2,
**dadurch gekennzeichnet,**
**dass** der Kopfring (43) einen Zentrieransatz (53) aufweist, der mit einer Innenmantelfläche (55) des Hülsenabschnitts (17) zusammenwirkt.

4. Schwingungsdämpfer nach Anspruch 2,
**dadurch gekennzeichnet,**
**dass** die Anschlagfläche (39) von einer Scheibenanordnung (45) gebildet wird.

5. Schwingungsdämpfer nach Anspruch 2,
**dadurch gekennzeichnet,**
**dass** der Kopfring (43) in Richtung des Hülsenabschnitts (17) ein Stufenprofil (47) zur Abstützung der Scheibenabordnung (45) aufweist, die mit einer Stufe des Stufenprofils eine Ringnut (49) für einen axial beweglichen Ventilring (51) bildet.

6. Schwingungsdämpfer nach Anspruch 1,
**dadurch gekennzeichnet,**
**dass** der Verteilerabschnitt (15) mindestens einen in Richtung des Kolbens 5 ausgerichteten Absatz (19) aufweist, der zusammen mit einer axialen Stirnfläche (21) des Kolbens (5) eine Ringnut (23) für einen Ventilring (25) bildet.

## Claims

1. Vibration damper with a structural unit for generating an amplitude-dependent damping force, comprising a distributor portion which is fixed to a piston and which via a connection controls a damping-medium flow between a flow connection and at least one bypass within a sleeve portion of the structural unit, the structural unit having a switching ring which is axially moveable between two stop faces and which controls the flow connection, and a fastening means fixing the structural unit on a piston rod of the vibration damper, **characterized in that** the distributor portion (15) and the sleeve portion (17) are produced in one piece and with the piston (5) form, via a common tension ring (57), a tensioning chain.

2. Vibration damper according to Claim 1, **characterized in that** a head ring (43) at that end of the sleeve portion (17) which lies opposite the distributor portion (15) carries one of the stop faces (37; 39) for the switching ring (41).

3. Vibration damper according to Claim 2, **characterized in that** the head ring (43) has a centring extension (53) which cooperates with an inner surface area (55) of the sleeve portion (17).

4. Vibration damper according to Claim 2, **characterized in that** the stop face (39) is formed by a disc arrangement (45).

5. Vibration damper according to Claim 2, **characterized in that** the head ring (43) has, in the direction of the sleeve portion (17), a step profile (47) for supporting the disc arrangement (45) which, with a step of the step profile, forms an annular groove (49) for an axially moveable valve ring (51).

6. Vibration damper according to Claim 1, **characterized in that** the distributor portion (15) has at least one shoulder (19) which is oriented in the direction of the piston (5) and which, together with an axial end face (21) of the piston (5), forms an annular groove (23) for a valve ring (25).

## Revendications

1. Amortisseur de vibrations avec une unité constructive pour produire une force d'amortissement dépendant de l'amplitude, comprenant une portion de distributeur fixée à un piston, qui commande, par le biais d'un raccord, un écoulement de fluide d'amortissement entre une connexion d'écoulement et au moins une dérivation à l'intérieur d'une portion de douille de l'unité constructive, l'unité constructive présentant une bague de commutation déplaçable axialement entre deux faces de butée, qui commande la connexion d'écoulement, et un moyen de fixation fixant l'unité constructive sur une tige de piston de l'amortisseur de vibrations,
**caractérisé en ce que**
la portion de distributeur (15) et la portion de douille (17) sont réalisées d'une seule pièce et forment avec le piston (5), par le biais d'une bague de serrage commune (57), une chaîne de serrage.

2. Amortisseur de vibrations selon la revendication 1,
**caractérisé en ce**
**qu'**une bague de tête (43) sur l'extrémité de la portion de douille (17) opposée à la portion de distributeur (15) porte l'une des faces de butée (37 ; 39) pour la bague de commutation (41).

3. Amortisseur de vibrations selon la revendication 2,
**caractérisé en ce que**
la bague de tête (43) présente un insert de centrage (53), qui coopère avec une surface d'enveloppe interne (55) de la portion de douille (17).

4. Amortisseur de vibrations selon la revendication 2,
**caractérisé en ce que**
la face de butée (39) est formée par un agencement de disques (45).

5. Amortisseur de vibrations selon la revendication 2,
**caractérisé en ce que**
la bague de tête (43) présente, dans la direction de la portion de douille (17), un profil étagé (47) pour supporter l'agencement de disques (45), qui forme avec un étage du profil étagé une rainure annulaire (49) pour une bague de soupape déplaçable axialement (51).

6. Amortisseur de vibrations selon la revendication 1,
**caractérisé en ce que**
la portion de distributeur (15) présente au moins un épaulement (19) orienté dans la direction du piston (5), qui forme conjointement avec une face frontale axiale (21) du piston (5) une rainure annulaire (23) pour une bague de soupape (25).
